# EUROPEAN PATENT APPLICATION

(11) **EP 3 569 071 A2**
(43) Date of publication of application: **20.11.2019**
(21) Application number: 19165866.5
(22) Date of filing: 28.03.2019
(51) Int. Cl.: A23L 7/122, A21D 13/20, A21D 13/80, A23L 19/18, A23L 29/30, A23P 10/00, A23P 20/10

(54) **BAKERY PRODUCT WITH LOW WATER ACTIVITY HAVING ENHANCED FLAVOR AND EATING FEATURES**

(30) Priority: 25.04.2018 TR 201805829
(71) Applicant: Eti Gida Sanayi Ve Ticaret Anonim Sirketi, Eskisehir (TR)
(72) Inventor: KANATLI, AHMET FIRUZHAN, ESKISEHIR (TR)
(74) Representative: Sevinç, Cenk

(57) **Abstract**

The present invention relates to production method of original products and food products that are produced with this method by bringing bakery products such as crackers, biscuits, cookies, etc. produced with conventional methods, together with low-density (0,05-0,55 gr/cm³) extrude products, be it in broken form or as a whole, produced by means of using high-pressure extrusion method and by taking advantage of the glass transition feature of starch and reprocessing them.

## Description

### Technical Field

The present invention relates to production method of original products and products that are produced with this method by bringing bakery products such as crackers, biscuits, cookies, etc. produced with conventional methods, together with low-density (0,05-0,55 gr/cm³) extrude products, be it in broken form or as a whole, produced by means of using high-pressure extrusion method and by taking advantage of the glass transition feature of starch and reprocessing them.

### State of the Art

In the state of the art, products such as potato chips are usually produced with high-pressure extrusion method, subsequently these products are seasoned, basted and coated with other fluids or powders such as sugary solutions at the end of the extrusion and are rendered end products after being dried in order to maintain their crispiness.

However, bakery products such as crackers, biscuits and cookies are produced by conventional means including rotary molding method wherein products are cut into pieces from filo pastry, deposit method, low-pressure extrusion-coextrusion method or wire cutter. Depending on the type of the product, various seasoning applications can be performed subsequently after baking process in order to create a diversity of flavors suited for various palatal delights. Additives manufactured by the food industry and used for adding flavor or scent (aroma) to food products are also called seasoning. Following the seasoning and coating processes, products are cooled down within medium or cooling tunnels and are rendered end products. When these products are applied with seasonings with water content, end product moisture increases and in case when low-moisture and crispy products are desired to be produced, products' moisture level increases due to these water content seasonings and therefore, methods used in the state of the art fail to deliver a satisfactory performance. Although the moisture levels of bakery products produced with conventional methods can be decreased by means of drying processes, using of structurally (texture) different products is not known in the state of the art.

In case when deep frying method is utilized in order to achieve the desired level of crispiness, product becomes excessively saturated with frying oil and shelf life may be adversely affected due to the oil oxidation. In the deep-frying procedure, starch is the main ingredient in providing crispiness/crunchiness to the product. At the beginning of the deep-frying process, straight amyloses chains contained inside starch granules extrude from granular structure with the effect of procedure temperature and the water content inside the dough and provide gelling. When the water content within the gellous structure removed rapidly during the progressive steps of the deep-frying procedure, the product reaches to the maximum level of crispiness.

In the state of the art, particles to be attached on the bakery products, are applied by means of cohesive solutions prior to the baking process and are baked together with products. In these methods however, since volume values and dimensions of some bakery products may show some alterations (such as rising during baking) some particles fail to attach to the bakery product and fall out. Furthermore, since baking temperatures are quite high (150-350°C), particles that are of sensitive structure may burn or even may suffer from alterations in their structure. Consequently, these particles lose their aromas, their shelf lives may be affected adversely due to overcooking or burning. Moreover, acrylamide formation in products that are high in sugar and starch content may be even higher.

In the patent application document bearing the number of US2004067282 in the state of the art, dried nuts, dried fruits or low-moisture bakery products are coated with a dough containing pregelatinized starch, wheat flour and potato starch. Subsequently after the abovementioned coating process, moisture level of the product is lowered by means of baking process and a cooling procedure is performed after baking.

In the patent application bearing the number of US2008317907, baked product is coated with maltodextrin solution while it is still hot. The moisture level of the product is lowered not with a heat absorption drying procedure but through the product's own temperature. Consequently, this causes the end product to remain moist and prevents it from being in the desired level of crispiness.

The patent application numbered US2013302487 discloses compositions that allow for decreasing of starch-based doughs, coating of product by taking advantage of product's staling and retarding greatly the breaking of product. Furthermore, in case of using this starch-based coating agent and/or using of product discard that was baked with encrusting, inner crispiness of the product can be increased further which would result in eating a product that is relatively and inconveniently of rough structure.

The patent application numbered WO2016028145 in the state of the art discloses a gluten-free composition containing rice and hydroxypropyl methylcellulose and a method of gluten-free product preparation and it further mentions extruding of dough, coating of the extrusion product and alkaline solution and its baking procedure.

### Problems The Present Invention Seeks To Solve

The present invention relates to a solution developed against problems encountered in bringing bakery products (biscuits, crackers, cookies, extrude puffed products, etc.) of different structure and composition, produced with different methods (baking, extrusion, etc.) without causing them to lose their organoleptic characteristics.

It is therefore the main object of the present invention to allow for producing bakery products of a completely new structure by means of bringing bakery products produced with different methods and that are of different structure and of composition together with a new method without causing them to lose their original characteristics.

It is thus another object of the present invention to allow for using new components in addition to the original component features, by means of utilizing superimposing agents of different structure and flavor (carbohydrate-based solutions - sugar solutions, starch solution, maltodextrin solution, etc. or protein-based solutions - milk powder solution, egg solution, etc.) with novel method.

It is therefore another object of the present invention to allow for producing original products by means of utilizing superimposing agents that are of different structure and flavors through novel method and by using new components in addition to the original component characteristics.

It is thus another object of the present invention to render bakery products produced with conventional methods end products by means of applying the drying process at lower temperatures in order to reduce the acrylamide amounts.

It is therefore another object of the present invention to allow for producing next-generation products that are of crispy structure by means of bringing chip-like products that are aromatized and oiled subsequently after extrusion procedure and crackers without utilizing deep frying method.

It is thus another object of the present invention to allow for extrude particles attached to surfaces of bakery products such as crackers, biscuits, cookies, etc. to attach even stronger and to prevent these particles from falling out.

It is therefore another object of the present invention to make the surface appearance of bakery products produced with conventional methods look brighter and more appealing.

### Description of the Figures

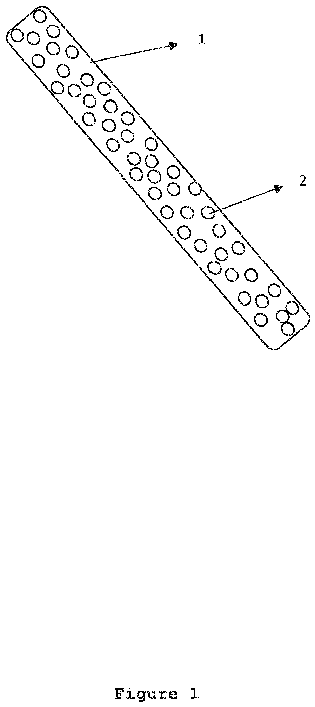

Figure 1 illustrates the general view of the bakery product

### Description of References in Figures

Parts that can be observed in Figures are enumerated and their descriptions in this regard are provided below:
1: Carrier Component
2: Carrier Coating

### Disclosure of the Invention

The present invention relates to a food product with moisture levels between %1,2-%8 and therefore having a feature of crispiness by means of applying carbohydrate and/or protein-based superimposing solution to products produced with conventional baking methods (with oven types including tunnel, rotary, tray, etc. or with extrusion) such as crackers, biscuits, cookies, etc. and subsequently pouring/sprinkling particles of extrude structure in the threshold between 0,5 - 5,0 mm over superimposing solution applied product and rendering it end product after subjecting it to drying process in low temperature.

The inventive crispy food product is provided with at least one superimposing solution over the carrier component (1) and at least one carrier coating (2). The abovementioned superimposing solution can be selected out of solutions having carbohydrate content and/or one of protein containing solution or a mixture thereof. Carrier coating (2) is selected from extrude particles. The inventive crispy food product's carrier component (1) is selected from oven-dried, extruded bakery products, bakery products with grain and/or legume contents, products having milk content, products with cocoa content and particularly bakery products of different shape and size, salty or sweet, baked, extruded crackers, grain and/or with legume content.

As for superimposing solution, out of solutions having carbohydrate content, at least one of maltodextrin, corn/rice/wheat/potato starch, syrups containing glucose and fructose, or combination or mixture of substances selected from this group can be used. Maltodextrin solutions which are one of solutions with carbohydrate content are particularly used in a concentration threshold of 10%-50%. As for solutions with protein content, milk powder solution, egg solution, etc. can be used.

Extrude particles being used as carrier coating (2) material, are low-density (0,05-0,55 gr/cm³) particles produced by taking advantage of the glass transition feature of starch and by means of utilizing high-pressure extrusion method. These particles are obtained out of burstings that occur due to the realization of expansion and baking processes which substantiate through the means of high-pressure single or double screw extrusion procedure by giving the raw material which is being fed in powder form a viscoelastic structure through the temperature and surface tension due to pressure and hence, removing the crystal structure of the starch and with the sudden evaporation of moisture within the product due to the pressure drop at the final step. The most pivotal change that occurs in starch's structure is gelatinization due to high shear stress in the low moisture content of starch and its degradation at a certain amount. Thus, the entire chemistry of matter changes and a porous structure forms due to expansion. These particles which are used as carrier coating (2) material can be extrude milk-based crispy/crunchy products (cheese, etc.), extrude grain (corn, wheat, barley, rye, etc.) puffs or crumbs of these grain puffs, extrude legume (chickpea, beans, lentil, etc.) puffs or crumbs of these puffs, heat treated grains or legumes.

Furthermore; as for carrier coating (2) material products that are used as filling in pastry and candy decoration, fresh bread, fresh bread crumbs, toasted bread, toasted bread crumbs, heat treated bread, heat treated bread crumbs, crackers, biscuits, cookies, wafers and such like products that are produced with conventional methods and crumbs of these products, grain products and their crumbs, roasted or raw (appetizers) edible dried nuts (almond, hazelnut, walnut, peanut, pistachio, pine nut, cashew, etc.), dried fruits, cocoa bean, chestnut, soy bean or at least one that contains its derivations or more than one material combination or mixture selected out of this group can be used.

Food product having coating according to the present invention, carrier component (1) for example can be crackers in stick or strip form having distribution at any shape and size or cylindrical form.

The amount of carrier coating (2) in the coated end product of the present invention can vary in a wide range. In a particular embodiment, within the coated food product of the present invention, the amount of carrier coating (2) indicated with dry weight is between 8-20% with regard to the total weight of coated end product of the present invention and preferably around 12.5%.

Carrier coating (2) on the ultimate coated form of the present invention provides an increase on carrier component's (1) surface area and thus, serves as a carrier layer on the carrier coating (2) which seasoning to be added can attach in order to provide different flavors to the product.

Organoleptic characteristics of the bakery product to be coated by means of the coating and carrier coating (2) proposed together with food product having coating according to the present invention remain unchanged.

A second aspect of the present invention relates to a production procedure of the food product obtained by means of superimposing solution and carrier coating (2). The abovementioned procedure allows for bringing materials together without causing any effect (without disrupting the structure by heat treatments) on the characteristics of carrier components (1) wherein procedure comprises process steps of;
a) spreading of carrier component (1) dough in order to obtain roasted, extruded bakery products, bakery products having grain and/or legume content, products with milk content, products with cocoa content, in particular; roasted, extruded, sweet or salty crackers in different shapes and sizes, bakery products with grain and/or legume content,
b) shaping carrier component (1) dough in the bakery product of desired form, particularly shaping the dough in cracker form having stick or strip shape with a distribution at any shape and size or cylindrical form,
c) performing the coating/basting/sprinkling/spraying of solutions containing carbohydrates, proteins or a superimposing solution consisting of mixtures of these solutions in order to allow carrier coating (2) materials/particles to attach and in order to increase the surface tackiness,
d) coating/pouring/sprinkling of at least one carrier coating (2) or a mixture consisting of combination of materials of carrier coating (2) selected from particles that are of extruded structure over carrying component (1) that is coated with superimposing solution to increase the surface area of carrier component (1) in the end product and to allow the seasoning to be spilled to or coated over carrier coating (2) to attach in order to provide different flavors to the product and to create the carrier layer,
e) subjecting carrier component (1) dough which is obtained subsequently after coating materials/particles that are coated/poured/sprinkled over the coated/poured/sprinkled/sprayed superimposing solution to heat treatment (baking) at a temperature between 200-350°C,
f) coating/pouring/sprinkling/spraying a superimposing solution consisting of solutions with carbohydrate, protein content or a mixture of these over food product obtained after baking process with heat treatment,
g) applying a second heat treatment (drying) at 80-120°C (low temperature) in order to allow for the decreasing of acrylamide amount, to remove moisture from product and to provide the product a desired crispy form and subsequently rendering product a uniform food product by means of attaching carrier component (1) with superimposing solution and carrier coating (2) material altogether,
h) coating the food product which was heat treated for a second time with oil and/or oil-based solution if required and obtaining different aromas by means of coating/pouring/sprinkling/spraying different spices, aromas, seasonings that can attach to oil,
i) and cooling down the obtained food product.

In alternative embodiment of the invention;
a) spreading of carrier component (1) dough in order to obtain roasted, extruded bakery products, bakery products having grain and/or legume content, products with milk content, products with cocoa content, in particular; roasted, extruded, sweet or salty crackers in different shapes and sizes, bakery products with grain and/or legume content,
b) shaping carrier component (1) dough as in the bakery product of desired form and particularly shaping the dough in cracker form having stick or strip shape with a distribution at any shape and size or cylindrical form,
c) subjecting carrier component (1) dough shaped in accordance with the form of desired bakery product to a heat treatment (baking) at a temperature between 200-350°C,
d) performing the coating/basting/sprinkling/spraying of solutions containing carbohydrates, proteins or a superimposing solution consisting of mixtures of these solutions in order to allow carrier coating (2) materials/particles to attach and in order to increase the surface tackiness,
e) coating/pouring/sprinkling of at least one carrier coating (2) or a mixture consisting of combination of materials of carrier coating (2) selected from particles that are of extruded structure over carrying component (1) that is coated with superimposing solution to increase the surface area of carrier component (1) in the end product or to allow the seasoning to be spilled to or coated over carrier coating (2) to attach in order to provide different flavors to the product and to create the carrier layer,
f) applying a second heat treatment (drying) at 80-120°C (low temperature) to food product obtained after coating/pouring/sprinkling of coating materials/particles coated/poured/sprinkled/sprayed over superimposing solution in order to allow for the decreasing of acrylamide amount, to remove moisture from product and to provide the product a desired crispy form and subsequently rendering product a uniform food product by means of attaching carrier component (1) with superimposing solution and carrier coating (2) material altogether,
g) coating the food product which was heat treated for a second time with oil and/or oil-based solution if required and obtaining different aromas by means of coating/pouring/sprinkling/spraying different spices, aromas, seasonings that can attach to oil,
h) and cooling down the obtained food product.

By means of the inventive food product obtained through bringing components together without causing any changes on the characteristics of components (without disrupting the structure through heat treatments) following advantages can be provided: Since particles that are sensitive to heat are applied to product after baking of the base product and dried at lower temperatures (80-120°C), they are not damaged and hence they maintain their quality. Moreover, the moisture of highly moist base product is prevented from permeating into particles.

In the production of seasoned crackers which is one of the products known in the state of the art, the process step of sprinkling seasoning particles on carrier component's (1) surface is performed prior to the first heat treatment. Therefore, subjecting the product to a second heat treatment for drying at a temperature between 80-120°C is not required. In the present invention, seasoning particles are applied subsequently after the second heat treatment and ensured that they are added to the end product without losing their characteristics under high temperatures. Furthermore, the present invention ensures that crispy/crunchy particles applied over carrier component (1) by means of the second heat treatment attach to product and that these particles remain attached to the product and do not fall off. Thus, falling off of particles and/or seasonings attached to bakery product's surface into the packaging is minimized. Furthermore, by means of the present invention the moisture balance of product can be achieved which prevents microcracks from occurring accordingly, product can be obtained with low water content and crispiness/crunchiness characteristic of product can be enhanced without making any changes on product's content. Additionally, by means of the second heat treatment (drying), product can acquire color more easily.

Depending on consumers' preference, the inventive bakery product can also be obtained by removing oil spraying and liquid aroma or powder seasoning attaching steps performed after the second heat treatment. Or extruded particles used in the process step of coating dough's surface by sprinkling particles obtained by means of extrusion method over baked carrier component's (1) surface can be particles that have already been subjected to oil spraying and seasoning, liquid aroma or powder seasoning attachment process steps. Furthermore, as carrier component (1) dough can be in stick/cylindrical cracker shape, it can also have geometrically different shapes and even further shapes that have a hole at the center.

Product made out of dough with unmodified content obtained through the bakery product production method with enhanced crispiness/crunchiness features and of which water activity is lowered by balancing moisture values through a double stage heat treatment (baking and drying) by means of blending carrier component (1) and carrier coating (2) particles of different textures together, resembles crackers in terms of containing less frying oil compared to products deep fried in frying oil with oil rate of 30-35% and is similar to chips in terms of crispiness characteristics. Moreover, since the structure of the wheat flour is not changed partially or completely due to starch used in order to enhance crispiness/crunchiness feature of cracker, protein amount within the product is maintained and thus, the fragility of the product remains unchanged. Table 1 demonstrates product's moisture values after baking and drying processes and data regarding the oil rate of bakery product.

**Table 1. Features of the bakery product**

| | **Product Values** |
|---|---|
| Moisture value after the 1st heat treatment process (baking) | %3-8 |
| Moisture value after the 2nd heat treatment process (drying) | %1,2-3,0 |
| Oil rate of the bakery product | %15-17 |

As it can be understood from the Table 1, the moisture level of product obtained after the second heat treatment (drying) is relatively low. In order to lower product's moisture level, an increase has to be made in the duration of baking process, however, this consequently results in the loss of dough characteristics and increases cost of operation. By means of the double stage heat treatment (baking and drying) technique in the inventive bakery product production method, moisture distribution within the product can be balanced. Thus, without the any elongation in baking duration, bakery product with low water content can be enhanced further together with achieving optimum end product characteristics. Furthermore, by means of the present invention microcrack occurrence risk is eliminated and accordingly product gains an additional durability and by the courtesy of maltodextrin usage a more glazed and appealing bakery product can be obtained.

Since particles that are attached to bakery products are of porous structure, surface is of product expands and thus, product's aroma retaining capability and adherence capacity of flavoring seasonings to product can be enhanced. While aroma or seasoning ratio of products having flat/smooth surfaces is at 3-4% at maximum, this ratio can be increased up to 10% by means of the present invention.

### Industrial Application of the Present Invention:

The inventive bakery product with low water activity and its production method ensures and allows for producing bakery product that is of a characteristically superior structure by means of its unmodified dough content, of which moisture distribution within product can be balanced double stage heat treatment (baking and drying) technique and of which crispiness/crunchiness and its flavor and eating characteristics are enhanced by means of applying crispy/crunchy coating particles (2) when compared to present bakery products.

## Claims

1. Food product with low water activity having enhanced flavor, crispiness and eating features and a moisture rate between rates of 1.2%-8%, **characterized in that** it comprises carrier component (1) produced with conventional baking methods (with tunnel, rotary, tray etc. type baker ovens, extrusion, etc.) and carbohydrate and/or protein based superimposing solution of carrier component (1) applied both before and after baking and carrier coating (2) having particles of extruded structure between dimensions of 0.5-5.0 mm to be poured/sprinkled over superimposing solution.

2. Superimposing solution according to Claim 1, **characterized in that** it comprises of at least one of maltodextrin, corn/rice/wheat/potato starch, glucose and fructose syrups or a solution combination selected from this group or a solution having carbohydrate content selected from mixtures thereof.

3. Superimposing solution according to Claim 2 **characterized by** comprising the solution with carbohydrate content having maltodextrin at a concentration between 10-50%.

4. Superimposing solution according to Claim 1 **characterized by** comprising the solution with protein content selected from milk, milk powder solution, egg solution or a mixture thereof.

5. Carrier component (1) according to Claim 1, **characterized by** comprising roasted, extruded bakery products, bakery products having grain and/or legume content, products with milk content, products with cocoa content, in particular; roasted, extruded, sweet or salty crackers in different shapes and sizes, bakery products with grain and/or legume content.

6. Carrier component (1) according to Claim 5, **characterized by** comprising crackers in stick or strip form having distribution at any shape and size or cylindrical form.

7. Carrier coating (2) according to Claim 1 **characterized by** comprising fresh bread, fresh bread crumbs, toasted bread, toasted bread crumbs, heat treated bread, heat treated bread crumbs, crackers, biscuits, cookies, wafers and such like products that are produced with conventional methods and crumbs of these products, grain products and their crumbs, roasted or raw (appetizers) edible dried nuts (almond, hazelnut, walnut, peanut, pistachio, pine nut, cashew, etc.), dried fruits, cocoa bean, chestnut, soy bean or at least one that contains its derivations or more than one material combination or mixture selected out of this group.

8. Carrier coating (2) according to Claim 1, **characterized by** comprising extrude particles, wherein these particles are obtained out of burstings that occur due to the realization of expansion and baking processes which substantiate through the means of high-pressure single or double screw extrusion procedure by giving the raw material which is being fed in powder form a viscoelastic structure through the temperature and surface tension due to pressure and hence, removing the crystal structure of the starch and with the sudden evaporation of moisture within the product due to the pressure drop at the final step.

9. Extrude particles according to Claim 8, **characterized by** comprising extrude milk-based crispy/crunchy products (cheese, etc.), extrude grain (corn, wheat, barley, rye, etc.) puffs or crumbs of these grain puffs, extrude legume (chickpea, beans, lentil, etc.) puffs or crumbs of these puffs, heat treated grains or legumes.

10. Extrude particles according to Claim 8, **characterized by** comprising low-density (0,05-0,55 gr/cm³) particles produced by taking advantage of the glass transition feature of starch and by means of utilizing high-pressure extrusion method.

11. Method for producing a bakery product with low water activity, wherein the method allows for bringing materials together without causing any damage (without disrupting the structure due to heat treatment) to characteristics of the carrier components (1), **characterized by** comprising the process steps of;
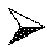 spreading of carrier component (1) dough in order to obtain roasted, extruded bakery products, bakery products having grain and/or legume content, products with milk content, products with cocoa content, in particular; roasted, extruded, sweet or salty crackers in different shapes and sizes, bakery products with grain and/or legume content,
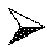 shaping carrier component (1) dough as in the bakery product of desired form and particularly shaping the dough in cracker form having stick or strip shape with a distribution at any shape and size or cylindrical form,
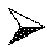 performing the coating/basting/sprinkling/spraying of solutions containing carbohydrates, proteins or a superimposing solution consisting of mixtures of these solutions in order to allow carrier coating (2) materials/particles to attach and in order to increase the surface tackiness,
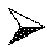 coating/pouring/sprinkling of at least one carrier coating (2) or a mixture consisting of combination of materials of carrier coating (2) selected from particles that are of extruded structure over carrying component (1) that is coated with superimposing solution to increase the surface area of carrier component (1) in the end product and to allow the seasoning to be spilled to or coated over carrier coating (2) to attach in order to provide different flavors to the product and to create the carrier layer,
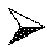 subjecting carrier component (1) dough obtained after coated/poured/sprinkled carrier coating (2) material over to heat treatment (baking) at a temperature between 200-350°C,
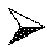 coating/pouring/sprinkling/spraying a superimposing solution consisting of solutions with carbohydrate, protein content or a mixture of these over food product obtained after baking process with heat treatment,
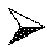 applying a second heat treatment (drying) at 80-120°C (low temperature) in order to allow for the decreasing of acrylamide amount, to remove moisture from product and to provide the product a desired crispy form and subsequently rendering product a uniform food product by means of attaching carrier component (1) with superimposing solution and carrier coating (2) material altogether, > and cooling down the obtained food product.

12. Method for producing a bakery product with low water activity of Claim 11, **characterized in that** in another application of the abovementioned method, subsequently after the process step of shaping carrier component (1) dough in the form of desired bakery product, the method further comprises the process steps of;
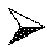 subjecting carrier component (1) dough shaped in accordance with the form of desired bakery product to a heat treatment (baking) at a temperature between 200-350°C,
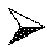 performing the coating/basting/sprinkling/spraying of solutions containing carbohydrates, proteins or a superimposing solution consisting of mixtures of these solutions in order to allow carrier coating (2) materials/particles to attach and in order to increase the surface tackiness,
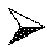 coating/pouring/sprinkling of at least one carrier coating (2) or a mixture consisting of combination of materials of carrier coating (2) selected from particles that are of extruded structure over carrying component (1) that is coated with superimposing solution to increase the surface area of carrier component (1) in the end product and to allow the seasoning to be spilled to or coated over carrier coating (2) to attach in order to provide different flavors to the product and to create the carrier layer,
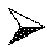 applying a second heat treatment (drying) at 80-120°C (low temperature) in order to allow for the decreasing of acrylamide amount of food product obtained after coated/poured/sprinkled carrier coating (2) material, to remove moisture from product and to provide the product a desired crispy form and subsequently rendering product a uniform food product by means of attaching carrier component (1) with superimposing solution and carrier coating (2) material altogether,
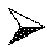 and cooling down the obtained food product.

13. Process step according to Claim 11, **characterized by** shaping carrier component (1) dough as in the bakery product of desired form and particularly shaping the dough in cracker form having stick or strip shape with a distribution at any shape and size or cylindrical form.

14. Method for producing a bakery product with low water activity according to Claim 11 or Claim 12, **characterized by** coating the heat-treated food product for a second time with oil and/or oil-based solution and obtaining different aromas by means of coating/pouring/sprinkling/spraying different spices, aromas, seasonings that can attach to oil prior to the cooling step of obtained food product.
